# EUROPEAN PATENT APPLICATION

(11) **EP 1 255 415 A1**
(43) Date of publication of application: **06.11.2002**
(21) Application number: 01309267.1
(22) Date of filing: 31.10.2001
(51) Int. Cl.: H04Q 7/24

(54) **Method and apparatus for supporting voice message services with call sender and feature code bookmark access in a wireless intelligent network**

(30) Priority: 30.04.2001 US 846020
(71) Applicant: LUCENT TECHNOLOGIES INC., Murray Hill, New Jersey 07974-0636 (US)
(72) Inventor: Alger, Langdon E., Lake Forest, Illinois 60045-1381 (US); Calabrese, Robert T., Naperville, Illinois 60566 (US); East, Tracy E., Oswego, Illinois 60543 (US); Rendak, John M., Naperville, Illinois 60564 (US); Zurawski, Robert J., Wheaton, Illinois 60187 (US)
(74) Representative: Buckley, Christopher Simon Thirsk

(57) **Abstract**

The present invention supports a voice messaging service in a wireless communications system. The wireless communications system comprises a serving mobile switching center (MSC), a service control point (SCP), and a voice messaging system (VMS). A subscriber accesses the VMS through a wireless device to retrieve voice messages that are deposited into the subscriber's voice mailbox. When listening to a voice message that is deposited by a call sender, the subscriber may wish to return a call to the call sender. In such a case, the subscriber initiates the call by invoking a call sender option. The call is established to the call sender's directory number through the serving MSC in concert with the SCP. After completing the call to the call sender, the subscriber may return to the VMS and resume the voice mail session at a desired location corresponding with the subscriber's previous interactions with the VMS.

## Description

### FIELD OF THE INVENTION

The present invention relates to a method and apparatus for supporting voice messaging service in a wireless communications system.

### BACKGROUND OF THE INVENTION

Wireless communications systems allow a subscriber telephone communications even though the subscriber may be traversing the wireless communications system of the subscriber's service provider or roaming outside the service provider's wireless communication system. However, communications to the subscriber may not be possible if radio frequency (RF) coverage is not ubiquitous or if a service agreement between the subscriber's service provider and the operator of another wireless communications system is not established. Moreover, there are situations, such as when in a court of law, when the subscriber does not wish to be disturbed. In such cases, the subscriber may wish to have the call sender deposit a voice message so that the subscriber can retrieve the voice message at a later time.

With the prior art, the subscriber may write the call sender's directory number (DN), disconnect from the voice messaging system, and dial the call sender's DN. Once the subscriber has completed the call with the call sender, the subscriber may wish to return to the voice messaging system. In such a case, the subscriber reconnects with the voice messaging system and navigates to the next voice message. This process is very cumbersome and user-unfriendly.

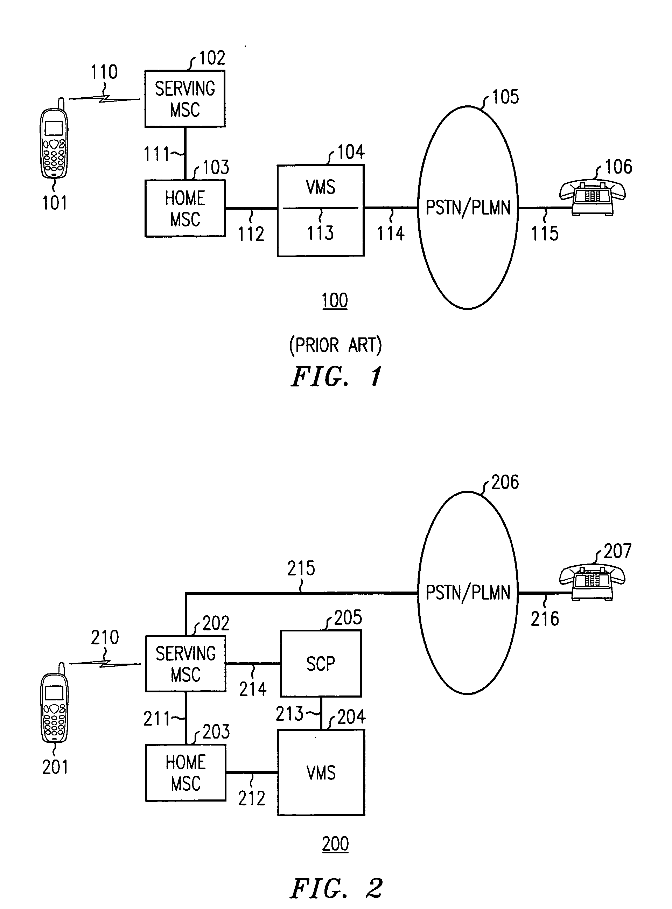

As an alternative to the manual process described heretofore, a voice messaging system (VMS) may use a front-end switch and a telephone facility configuration that enables the subscriber to navigate between the voice messaging system and the call sender. FIG. 1 illustrates an architecture of wireless communications system 100 that provides voice messaging service according to the prior art. The subscriber, through wireless device 101, accesses the subscriber's voice mailbox located on voice messaging system (VMS) 104 through radio link 110, serving mobile switching center (MSC) 102, interface 111, home MSC 103, and interface 112. With the architecture shown in FIG. 1, the subscriber may be listening to a voice message that has been deposited by a call sender 106. VMS 104 has previously collected the directory number (DN) of call sender 106 when call sender 106 deposited the voice message. In order for the subscriber to reply to call sender 106 in response to the voice message, the subscriber can enter a feature code (e.g. *88). VMS 104 recognizes the subscriber's request and establishes a call to call sender 106 through facility 113, facility 114, network 105, and facility 115 to call sender 106.

In the architecture shown in FIG. 1, VMS 104 configures the call through an additional facility 113 in order to complete the call. The architecture in FIG. 1 utilizes a front-end switch that is integrated with VMS 104. Because facilities 111, 112, and 113 use resources on serving MSC 102 and home MSC 103, and interface ports on VMS 104 are utilized during the entire time duration of the call, the cost for the service provider to offer the voice messaging service can be substantially increased.

These examples underscore the need for providing a solution that enables the subscriber to navigate between the subscriber's voice mailbox and a call to a call sender and that obviates the need for additional facilities that must be configured during the time duration of a call. Such a solution will provide the customer with an efficient means for returning calls to voice messages while reducing the associated costs to the wireless service provider.

### BRIEF SUMMARY OF THE INVENTION

The present invention supports a voice messaging service in a wireless communications system. The wireless communications system comprises a serving mobile switching center (MSC), a service control point (SCP), and a voice messaging system (VMS). A subscriber preferably accesses the VMS through a wireless device in order to retrieve voice messages that are deposited into the subscriber's voice mailbox. The serving MSC provides radio coverage for the wireless device. When listening to a voice message that is deposited by a call sender, the subscriber may wish to return a call to the call sender. In such a case, the subscriber initiates the return call by invoking a call sender option, preferably by entering a feature code, such as "*88". The call is established to the call sender's directory number (DN) through the serving MSC in concert with the SCP. After completing the call to the call sender, the subscriber can return to the VMS and resume the voice mail session at a desired location corresponding with the subscriber's previous interactions with the VMS. In such a case, the subscriber enters a feature rebound code, such as "*87", through the wireless device. Consequently, the serving MSC notifies the SCP with an indication of the feature rebound code, and the connection with a routing number is established. The VMS utilizes a stored history of the subscriber's voice mail session in accordance with the routing number, and the subscriber resumes the voice mail session, preferably at the point at which the subscriber left the VMS.

The present invention does not require additional telephone facilities and interface ports in order for the VMS to "camp-on" (monitor) a call between the subscriber's wireless device and the call sender's DN. Moreover, the present invention utilizes signaling messages to reconfigure the connection in accordance with the subscriber's invocation of a voice messaging feature allowing the subscriber to call the call sender's DN. Thus, the present invention reduces the cost of providing voice messaging services with capabilities that the subscriber desires.

The disclosure presents an exemplary embodiment in which a wireless communications system utilizes messages in accordance with TIA/EIA-41-D (Cellular Radiotelecommunications Intersystem Operations).

### BRIEF DESCRIPTION OF THE SEVERAL VIEWS OF THE DRAWINGS

FIG. 1 illustrates an architecture of a wireless communications system providing voice messaging service in accordance with the prior art;
FIG. 2 illustrates an architecture of a wireless communications system providing voice messaging service in accordance with the present invention;
FIG. 3 is a flow diagram depicting a subscriber's interactions in accordance with the present invention;
FIG. 4 is a continuation of the flow diagram shown in FIG. 3;
FIG. 5 is a message scenario in accordance with the present invention;
FIG. 6 depicts a data structure utilized at a voice messaging system in accordance with the present invention; and
FIG. 7 depicts a data structure utilized at a signaling control point in accordance with the present invention.

### DETAILED DESCRIPTION OF THE INVENTION

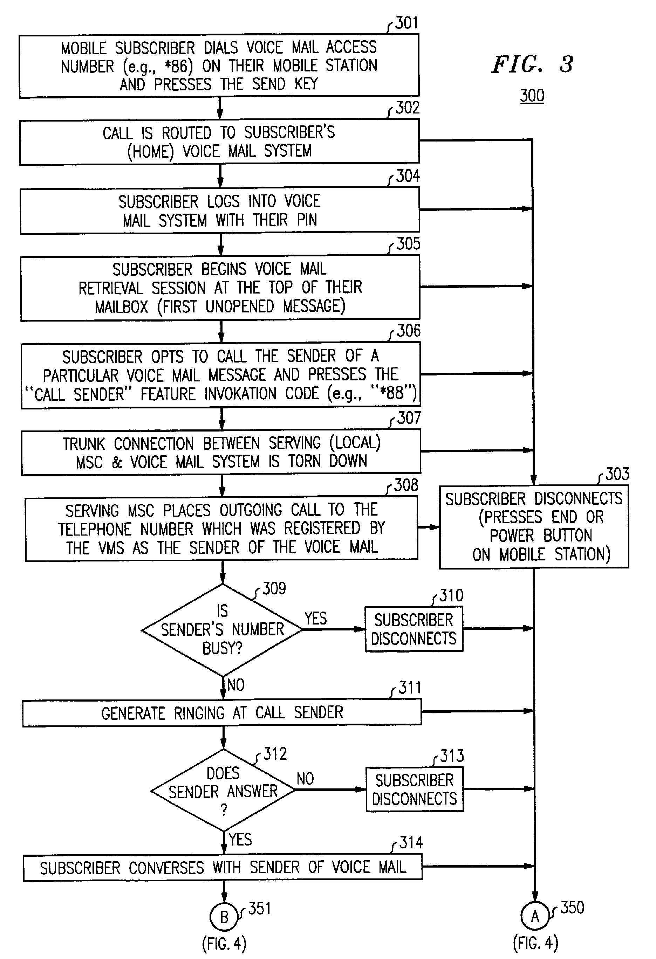

FIG. 2 illustrates an architecture of wireless communications system 200 providing voice messaging services in accordance with the present invention. A subscriber utilizes wireless device 201 to retrieve the subscriber's voice mail by accessing voice messaging system (VMS) 204. In order to do so, the subscriber initiates a call request to serving MSC 202 over radio link 210 by dialing a voice mail access code (e.g. "*86"). The discussion that is associated with FIG. 3 further describes the subscriber's interactions.

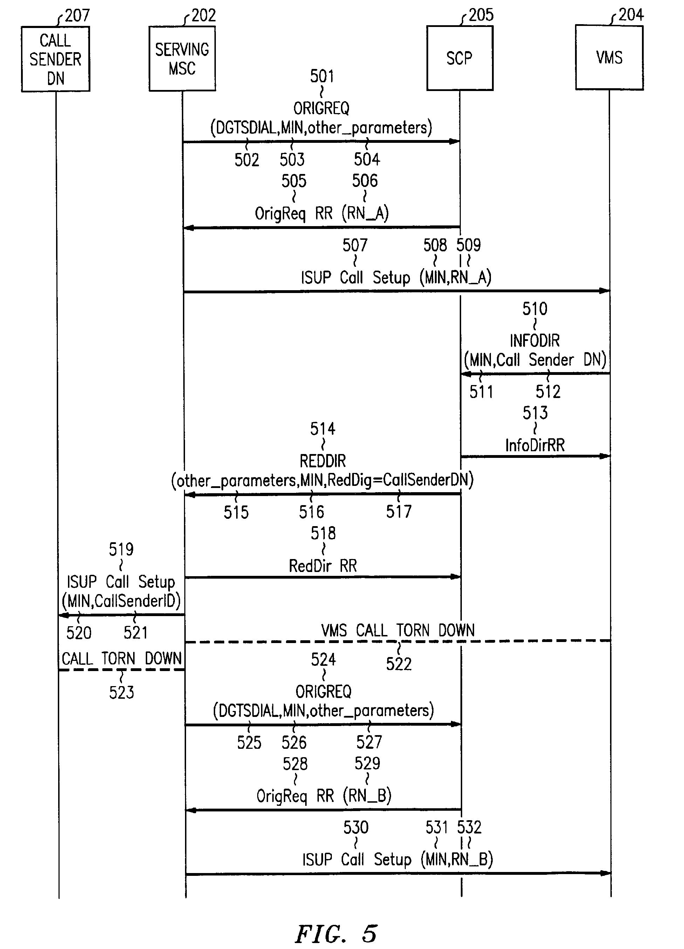

Serving MSC 202 queries service control point (SCP) 205 over interface 214 with the identification of wireless device 201 and dialed digits as entered by the subscriber. (The discussion regarding FIG. 5 further describes the corresponding message scenario.) SCP 205 returns a first routing number, which is associated with VMS 204, to serving MSC 202. Serving MSC 202 directs the call connection from wireless device 201 to VMS 204 through facility 211, home MSC 203, and interface 212. In the exemplary embodiment, VMS 204 is associated with home MSC 203 at which the subscriber is provisioned. Alternate embodiments may not utilize this association between home MSC 203 and VMS 204. A connection is established between wireless device 201 and VMS 204 in which the subscriber retrieves voice messages from the subscriber's voice mailbox.

While listening to a voice message deposited by a call sender 207, the subscriber may wish to respond to call sender 207. The call sender's directory number (DN) is preferably stored at VMS 204 in association with the voice message. In such a case, the subscriber enters a call sender feature invocation code (e.g. "*88") that is sent to VMS 204 utilizing either in-band signaling or out-of-band signaling. VMS 204 interprets the call sender feature invocation code and initiates the redirection of the connection in which a call is established between wireless device 201 and call sender 207 through radio link 210, serving MSC 202, facility 215, public switching telephone network or public land mobile network (PSTN/PLMN) 206, and facility 216. VMS 204 initiates the redirection by sending the appropriate messaging to SCP 205 through interface 213 (as further described in the context of FIG. 3). VMS 204 records a bookmark indicating a location in the subscriber's voice mailbox so that the subscriber can resume the voice mail session if the subscriber re-enters the voice mailbox using a feature rebound code, preferably at the place where they left the voice mail system.

If call sender 207 does not answer or when call sender 207 or wireless device 201 ends the return call, the subscriber may wish to return to the voice mail session and continue accessing voice mail. That being the case, the subscriber enters digits into wireless device 201 that correspond to the feature rebound code (e.g. "*87") and originates a subsequent call to serving MSC 202 over radio link 210. Serving MSC 202 queries SCP 205 over interface 214 with the identification of wireless device 201 and the dialed digits. Consequently, SCP 205 returns a second routing number that is associated with VMS 204. Serving MSC 202 directs the call connection from wireless device 201 to VMS 204 through facility 211, home MSC 203, and interface 212. Because the call connection utilizes the second routing number rather than the first routing number, VMS 204 retrieves the bookmark associated with the subscriber's voice mailbox, and the voice mail session resumes at the point at which the subscriber entered the feature invocation code. The subscriber may wish to return a call to a subsequent call sender, and the process described heretofore is repeated.

The architecture shown in FIG. 2 is applicable to variations of embodying the present invention. Serving MSC 202, home MSC 203, VMS 204, and SCP 205 should be construed as being logical entities that may physically co-exist with other logical entities as can be appreciated by one skilled in the art. For example, the functionality of SCP 205 may physically reside on the same platform as VMS 204. In such a case, interface 213 will correspond to internal signaling within the common platform. Moreover, serving MSC 202, home MSC 203, VMS 204, and SCP 205 typically comprise a computer (processor) in conjunction with peripheral hardware and software.

FIG. 3 depicts a flow diagram 300 of the subscriber's interactions in accordance with the present invention. In the context of FIG. 2 and FIG. 5, FIG. 3 facilitates the discussion of the present invention. In step 301, the subscriber wishes to retrieve voice mail that is contained in the subscriber's voice mailbox resident at VMS 204 and dials a voice mail access number (e.g. "*86"). A connection is established to VMS 204 in step 302, and the subscriber logs into VMS 204 by entering a personal identity number (PIN) in step 304. If the subscriber disconnects during the voice mail session, step 303 is executed and call flow 300 proceeds to step 350.

In step 305, the subscriber begins to retrieve voice messages at the beginning of the subscriber's voice mailbox. Sometime during the session, the subscriber wishes to respond to the call sender associated with one of the voice messages in step 306 by entering the call sender feature invocation code (e.g. "*88"). The call connection between serving MSC 202 and VMS 204 is disconnected in step 307, and a call from wireless device 201 and call sender 207 is established in step 308. If the call sender's DN is busy (i.e. on another call) as detected in step 309, the subscriber is disconnected and call processing proceeds to step 350. Otherwise, ringing is generated in step 311. Step 312 determines if call sender 207 answers the call. If not, the subscriber is disconnected, and call flow 300 proceeds to step 350. If so, the connection between the subscriber and the call sender is completed in step 314 and call flow 300 proceeds to step 351.

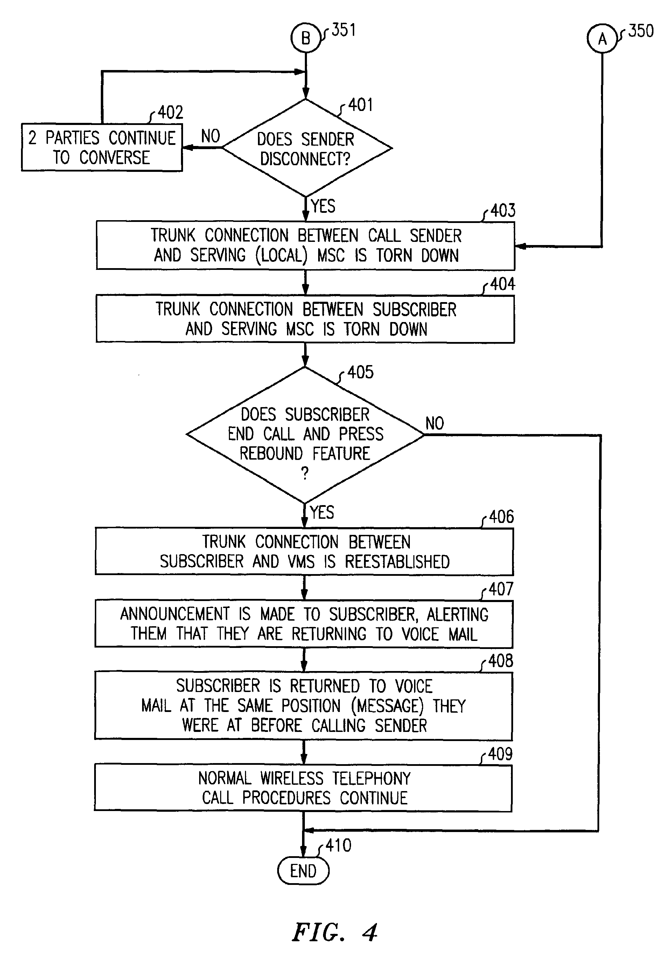

FIG. 4 is a continuation of flow diagram 300 as shown in FIG. 3. If the call flow proceeds with step 351, step 401 subsequently determines if the call sender disconnects. If not, the conversation between the subscriber and the call sender proceeds in step 402, and step 351 is repeated. If step 401 determines that the call sender does disconnect or if step 350 is reached, step 403 causes the connection between the call sender and serving MSC 202 to be torn down, and step 404 causes the connection between the subscriber (wireless device 201) and serving MSC 202 to be torn down.

If the call ends, such as by the subscriber hanging up and entering the feature rebound code (e.g. "*87") as determined in step 405, serving MSC 202 re-establishes the connection between the subscriber (i.e. wireless device 201) and VMS 204 in step 406. In a first embodiment, the subscriber waits for a predetermined time after call sender 207 releases and redials the feature rebound code to establish a connection between wireless device 201 and VMS 204. The predetermined time corresponds to a timer that is preferably maintained at serving MSC 202, causing the termination of the call. In a second embodiment, an out-of-band signaling message transports the feature rebound code from wireless device 201 to serving MSC 202. Call processing at serving MSC 202 processes the out-of-band signaling message in order to re-establish a connection between wireless device 201 and VMS 204.

An announcement is generated to wireless device 201 alerting the subscriber that the voice mail session is being resumed by VMS 204 in step 407. In a second embodiment of the present invention, an announcement is generated by serving MSC 202. Because the second routing number is utilized in re-establishing the call, VMS 204 causes the session to resume at the next voice message after the previously accessed voice message in step 408. Alternate embodiments may resume the session at the same message as was previously accessed. The voice mail session continues in step 409 in which the subscriber may wish to return a call to another call sender of a subsequent voice message in step 409. The procedure ends in step 410 at the completion of the voice mail session.

FIG. 5 is a message scenario illustrating the architecture shown in FIG. 2 and the flow diagram shown in FIGS. 3 and 4 according to the present invention. An origination request (ORIGREQ) message 501 is sent from serving MSC 202 to SCP 205 when the subscriber dials the voice mail access code (e.g. "*86" corresponding to step 301 in FIG. 3). ORIGREQ, OrigReq RR, REDDIR, and RedDir RR messages are specified in TIA/EIA-41.1-D: Cellular Radiotelecommunications Intersystem Operations. Message 501 includes DGTSDIAL field 502 (which equals the voice mail access code), MIN field 503 (which is the identity of wireless device 201), and other_parameters 504. In the case that MIN field 503 does not represent the mobile's directory number, TIA/EIA-41.1-D provides a mobile directory number (MDN) field. Other_parameters 504 is used for generating subsequent REDDIR message 514 and includes information such as a billing number and an identification of serving MSC 202.

In response to ORIGREQ message 501, SCP 205 returns an origination request response (OrigReq RR) message 505 to serving MSC 202. Message 505 includes first routing number (RN_A) 506 that serving MSC 202 utilizes for establishing a connection to VMS 204 with ISUP call setup procedure 507. Procedure 507 corresponds to step 302 in FIG. 3 and contains MIN field 508 and RN_A field 509. At this point of time, a connection is established between wireless device 201 and VMS 204 through serving MSC 202.

If the subscriber wants to return a call to the call sender of a voice mail message (corresponding to saved digits of the call sender's DN), the subscriber enters a call sender invocation code (e.g. *88) causing VMS 204 to send an information directive (INFODIR) message 510 with MIN field 511 (corresponding to the identification of wireless device 201) and call sender DN field 512 (corresponding to the call sender's DN) in accordance with step 306 in FIG. 3. SCP 205 acknowledges message 510 by returning an information directive response (InfoDir RR) message 513 to VMS 204.

SCP 205 redirects the connection to call sender 207 by sending a redirection directive (REDDIR) message 514 to serving MSC 202. Message 514 includes other_parameters 515 (which was saved from message 501), MIN field 516, and RegDig field 517 (equal to the call sender's DN). Serving MSC 202 acknowledges REDDIR message 514 by returning a redirection directive return (RedDir RR) message 518 to SCP 205. Serving MSC 202 completes the call between wireless device 201 and call sender 207 by preferably sending ISUP call setup procedure 519 in accordance with System Signaling 7 standards. Message 519 includes mobile identification number (MIN) field 520 and CallSender DN field 521. Consequently, a connection is established between call sender 207 and wireless device 201 through radio link 210, serving MSC 202, facility 215, PSTN/PLMN 206, and facility 216. Message 519 corresponds to step 308 in FIG. 3. Call event 522 corresponds to the previous connection between wireless device 201 and VMS 204 being torn down. At this point of time, a call is established between wireless device 201 and call sender 207.

If call sender 207 ends the call, the call is torn down between call sender 207 and serving MSC 202 (corresponding to steps 403 and 404 in FIG. 4). In the message scenario shown in FIG. 5, the subscriber wishes to resume the voice mail session, and thus the subscriber ends the call and enters a feature rebound code, such as "*87". Consequently, serving MSC 202 sends ORIGREQ message 524 to SCP 205 with digits dialed (DGTSDIAL) field 525 (corresponding to the feature rebound code), MIN field 526, and other_parameters 527. Other_parameters 527 is preferably saved by SCP 205 for a subsequent REDDIR message if the subscriber wants to return a call to another call sender.

In response to ORIGREQ message 524, SCP 205 returns an origination request response (OrigReq RR) message 528 with second routing number (RN_B) 529 to serving MSC 202. Serving MSC 202 re-establishes the connection between wireless device 201 and VMS 204 by sending ISUP call setup procedure 530 with MIN field 531 and RN_B field 532 to VMS 204. VMS 204 resumes the voice mail session in accordance with the bookmark that was previously saved at VMS 204.

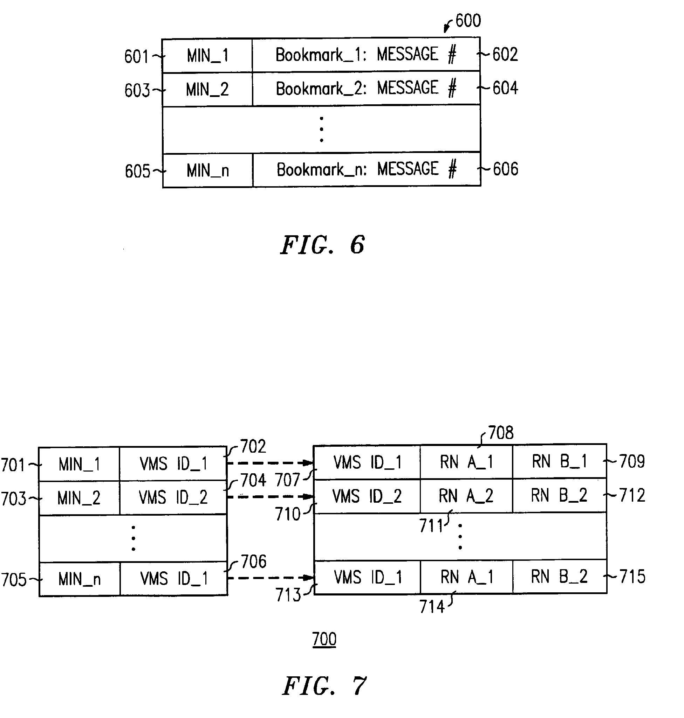

FIG. 6 depicts data structure 600 that is utilized at VMS 204 in order to save a bookmark for the subscriber's voice mail session. Data structure 600 stores the bookmarks for n voice mail sessions, each session corresponding to a wireless device that is identified in fields 601, 603, and 605. The corresponding bookmarks correspond to fields 602, 604, and 606. VMS 204 stores the bookmark of the subscriber when InfoDir RR message 513 is received from SCP 205. The bookmark is retrieved by VMS 204 when the voice mail session is re-established after VMS 204 receives ISUP call setup procedure 530. In a second embodiment of the present invention, automatic speech recognition or DTMF prompting can be utilized to obtain the identification of wireless device 201. VMS 204 requests that call sender 207 specify the identification of wireless device 201. VMS 204 then utilizes signal-detecting circuitry that translates the DTMF signals or the voice signals to a digit string corresponding to the identification of wireless device 201.

FIG. 7 depicts data structure 700 utilized at SCP 205 in order to determine the first routing number and the second routing number that are assigned to the voice messaging system, e.g. VMS 204. Data structure 700 associates an identification of the VMS (corresponding to fields 702, 704, and 706) with the identification of the wireless device (corresponding to fields 701, 703, and 705). As an example, with a wireless device having an identification equal to MIN_2 703, SCP 205 determines that the VMS identification is equal to VMS ID_2 704. The corresponding first routing number equals RN A_2 711 and the second routing number equals RN B_2 712.

The present invention thereby provides a method and apparatus for providing a solution that enables a subscriber to navigate between the subscriber's voice mailbox and a call to a call sender. The present invention also removes the need for additional facilities that must be configured during the time duration of a call. The present invention provides a customer with an efficient means for returning calls to voice messages while reducing the associated costs to the wireless service provider.

While this invention has been described in terms of certain examples thereof, it is not intended that it be limited to the above description, but rather only to the extent set forth in the claims that follow.

## Claims

1. A wireless communications system providing a voice messaging service for a subscriber associated with a voice mailbox for said voice messaging service, said subscriber utilizing a wireless device, said wireless communications system comprising:
a voice messaging system (VMS);
a serving mobile switching center (MSC) connected to said VMS;
means for requesting a first routing number from a service control point (SCP) by said serving MSC in response to said subscriber invoking said voice messaging service;
means for establishing a connection between said wireless device and said VMS through said serving MSC utilizing said first routing number, said connection enabling said subscriber to retrieve a voice message deposited by a call sender;
means for saving a bookmark by said VMS, said bookmark indicating a location in said voice mailbox in response to said subscriber's interaction with said voice messaging service; and
means for redirecting said connection from said VMS to said call sender's directory number (DN) through said serving MSC by said VMS in response to said subscriber invoking a call sender option.

2. The wireless communications system of claim 1, further comprising means for resuming said voice messaging service for said subscriber.

3. The wireless communications system of claim 2, wherein the means for resuming said voice messaging service for said subscriber comprises:
means for requesting a second routing number from said SCP by said serving MSC in response to said subscriber activating a rebound feature; and
means for re-establishing said connection between said wireless device and said VMS through said serving MSC utilizing said second routing number.

4. The wireless communications system of claim 2, further comprising means for resuming said voice messaging service for said subscriber at the same position prior to invoking the call sender option.

5. A memory for storing data for access by an application program being executed on a voice messaging system (VMS), said VMS associated with a wireless communications system, said applications program determining a subscriber's position in said subscriber's voice mailbox, said memory comprising:
a data structure stored in said memory, said data structure including information resident in a database used by said application program and including:
a subscriber's identification; and
a bookmark indicating the subscriber's position in said voice mailbox.

6. A memory for storing data for access by an applications program being executed on a service control point (SCP), said SCP associated with a wireless communications system, said applications program determining a telephone number for a connection between a serving mobile switching center (MSC) and a voice messaging system (VMS), said memory comprising:
a data structure stored in said memory, said data structure including information resident in at least one database used by said application program and including:
a subscriber's identification;
an identification of said VMS associated with said subscriber;
a first routing number, said first routing number determined by said identification of said VMS; and
a second routing number, said second routing number determined by said identification of said VMS.

7. A method for providing voice messaging service for a subscriber in a wireless communications system, said subscriber associated with a voice mailbox for said voice messaging service, said voice mailbox associated with a voice messaging system (VMS), said subscriber utilizing a wireless device, said subscriber served by a serving mobile switching center (MSC), said method comprising the steps of:
requesting a first routing number from a service control point (SCP) by a serving MSC responsive to said subscriber invoking said voice messaging service;
establishing a connection between said wireless device and said VMS through said serving MSC utilizing said first routing number, said connection enabling said subscriber to retrieve a voice message deposited by a call sender;
saving a bookmark by said VMS, said bookmark indicating a location in said voice mailbox responsive to said subscriber's interaction to said voice messaging service; and
redirecting said connection from said VMS to said call sender's directory number (DN) through said serving MSC by said VMS responsive to said subscriber invoking a call sender option.

8. The method of claim 7, further comprising the step of resuming said voice messaging service for said subscriber.

9. The method of claim 8, wherein the step of resuming said voice messaging service for said subscriber comprises:
requesting a second routing number from said SCP by said serving MSC in response to said subscriber activating a rebound feature; and
re-establishing said connection between said wireless device and said VMS through said serving MSC utilizing said second routing number.

10. A method for supporting a voice messaging service for a subscriber in a wireless communications system, said wireless communications system comprising a voice messaging system (VMS), a service control point (SCP), and a serving mobile switching center (MSC), said subscriber associated with a voice mailbox for providing said voice messaging service, said subscriber utilizing a wireless device, said method comprising the steps of:
requesting a first routing number from said SCP by said serving MSC responsive to said subscriber invoking said voice messaging service;
establishing a connection through said serving MSC by said serving MSC responsive to receiving said first routing number from said SCP, said connection being between said wireless device and said VMS;
redirecting said connection from said VMS to a call sender's directory number (DN) responsive to receiving an instruction from said SCP;
requesting a second routing number from said SCP by said serving MSC responsive to said subscriber activating a feature rebound code; and
re-establishing said connection between said wireless device and said VMS by said serving MSC responsive to receiving said second routing number from said SCP.
